# EUROPEAN PATENT APPLICATION

(11) **EP 4 171 055 A1**
(43) Date of publication of application: **26.04.2023**
(21) Application number: 20941458.0
(22) Date of filing: 17.06.2020
(51) Int. Cl.: H04Q 9/00

(54) **EQUIPMENT CONTROL SYSTEM, USER TERMINAL, EQUIPMENT CONTROL METHOD, AND PROGRAM**

(71) Applicant: MITSUBISHI ELECTRIC CORPORATION, Chiyoda-ku Tokyo 100-8310 (JP)
(72) Inventor: KUROIWA Takeru, Tokyo 100-8310 (JP)
(74) Representative: Studio Torta S.p.A.
(86) International application number: PCT/JP2020/023834
(87) International publication number: WO 2021/255874

(57) **Abstract**

Each transmitter (2) transmits an ID signal that is a wireless signal including an ID of the transmitter (2). A user terminal (3) includes a wireless signal receiver (300) to acquire an electric field strength at reception of the ID signal, a position acquirer (301) to acquire, for combinations of three transmitters (2) selected from four or more transmitters (2), estimated positions of the user terminal (3), each of the estimated positions being acquired based on (i) electric field strengths acquired for the three transmitters (2) of each combination and (ii) installation positions previously stored of the three transmitters (2) of each combination, a position specifier (302) to specify a position of the user terminal (3) based on the estimated positions acquired for each combination, and a facility device controller (303) to control a facility device (4, 5) based on the specified position.

## Description

### Technical Field

The present disclosure relates to a facility device control system, a user terminal, a facility device control method, and a program.

### Background Art

An air-conditioning system that estimates a position of a user who is present in a building, such as an office building or the like, and controls an air-conditioning device disposed in the building using the estimated position of the user is known (for example, Patent Literature 1).

Patent Literature 1 describes estimation of the position of the user, through wireless communication between transmitters disposed in an air-conditioning target area and a smartphone carried by the user, using a three-point measurement technique based on radio field strengths of radio waves received by the transmitters from the smartphone.

### Citation List

### Patent Literature

Patent Literature 1: Unexamined Japanese Patent Application Publication No. 2019-27603

### Summary of Invention

### Technical Problem

However, there is a problem in that, since an effect of multipath propagation or an effect of a metallic object or the like in the target area may cause an error in the radio field strength, acquiring the position of the user with high accuracy using a simple three-point measurement technique is difficult, which results in impairing proper control of a facility device, such as an air-conditioning device.

The present disclosure is made to solve such problems, and thus an objective of the present disclosure is to provide a facility device control system and the like that allow proper control of a facility device by specifying a position of a user with high accuracy.

### Solution to Problem

To achieve the above objective, a facility device control system according to the present disclosure includes
four or more transmitters and a user terminal, wherein
each transmitter of the four or more transmitters transmits a wireless signal including identification information for identification of the transmitter,
the user terminal includes
   electric field strength acquisition means for acquiring an electric field strength at reception of the wireless signal,
   installation position storage means for storing the identification information and an installation position in association with each other, for each transmitter,
   position acquisition means for acquiring, for combinations of three transmitters selected from the four or more transmitters, estimated positions of the user terminal, each of the estimated positions being acquired based on (i) electric field strengths acquired by the electric field strength acquisition means for the three transmitters of each combination and (ii) installation positions of the three transmitters of each combination,
   position specifying means for specifying a position of the user terminal based on the estimated positions acquired for each combination, and
   control means for controlling a facility device based on the specified position.

### Advantageous Effects of Invention

According to the present disclosure, proper control of the facility device can be achieved by specifying the position of the user with high accuracy.

### Brief Description of Drawings

FIG. 1 is a diagram illustrating an overall configuration of a facility device control system in Embodiment 1;
FIG. 2 is a block diagram illustrating a hardware configuration of a transmitter in Embodiment 1;
FIG. 3 is a block diagram illustrating a hardware configuration of a user terminal in Embodiment 1;
FIG. 4 is a block diagram illustrating a functional configuration of the user terminal in Embodiment 1;
FIG. 5 is a diagram for explaining a transmitter table in Embodiment 1;
FIG. 6 is a diagram for explaining a facility device table in Embodiment 1;
FIG. 7 is a diagram illustrating an example of a user position screen in Embodiment 1;
FIG. 8 is a flowchart illustrating steps of a facility device control process in Embodiment 1;
FIG. 9 is a diagram illustrating an overall configuration of a facility device control system in Embodiment 2;
FIG. 10 is a block diagram illustrating a hardware configuration of a robot in Embodiment 2; and
FIG. 11 is a block diagram illustrating a functional configuration of a user terminal in Embodiment 2.

### Description of Embodiments

Embodiments of the present disclosure are hereinafter described in detail with reference to the drawings.

A facility device control system of the present disclosure is a system for controlling facility devices disposed in a building, for example, an office building, a commercial building or the like.

### Embodiment 1

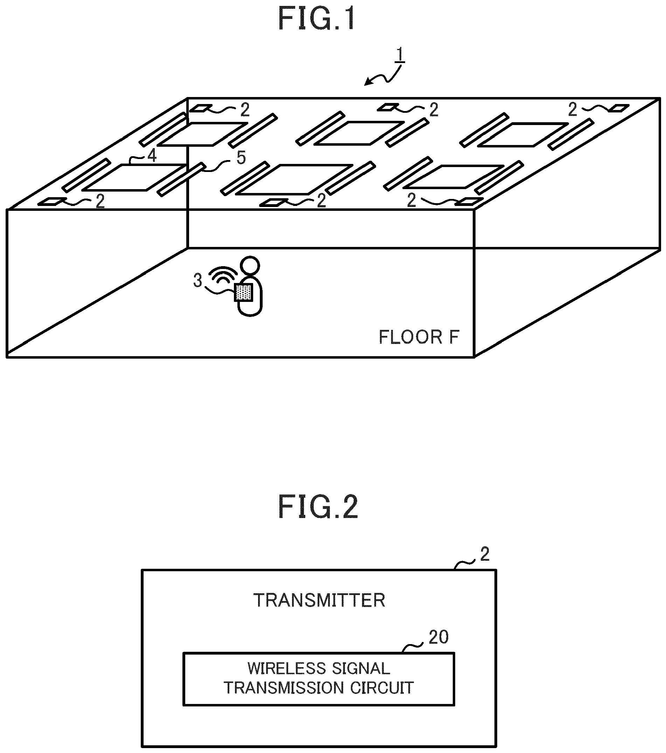

FIG. 1 is a diagram illustrating an overall configuration of a facility device control system 1 according to Embodiment 1. The facility device control system 1 includes six transmitters 2 installed on a ceiling in a floor F and a user terminal 3 carried by a user.

The transmitters 2 are installed to be scattered on the ceiling in the floor F. As illustrated in FIG. 2, the transmitter 2 includes a wireless signal transmission circuit 20, and periodically transmits a wireless signal (hereinafter referred to as an ID signal) including an identification (ID) that is identification information for identification of the transmitter (that is, the transmitter 2). For example, the transmitter 2 transmits the ID signal based on known wireless communication standards, such as Wi-Fi (registered trademark), Wi-SUN (registered trademark), Bluetooth (registered trademark) Low Energy (BLE), and the like.

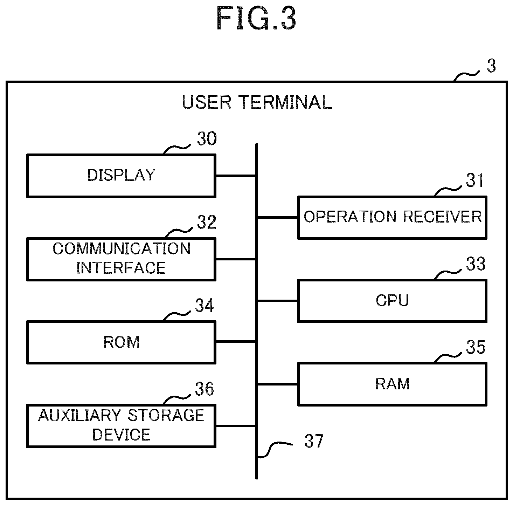

The user terminal 3 is a portable electronic device, such as a smartphone, a tablet terminal, or the like. As illustrated in FIG. 3, the user terminal 3 includes a display 30, an operation receiver 31, a communication interface 32, a central processing unit (CPU) 33, a read only memory (ROM) 34, a random access memory (RAM) 35, and an auxiliary storage device 36. These components are connected to one another via a bus 37.

The display 30 is configured to include a display device, such as a liquid crystal display, an organic electro luminescence (EL) display, and the like. The display 30 displays, under control of the CPU 33, various types of screens and the like in accordance with a user operation.

The operation receiver 31 is configured to include one or more input devices, such as a push button, a touch panel, a touch pad, and the like, and receives an operation input from a user and sends to the CPU 33 a signal relating to the received operation.

The communication interface 32 is hardware for receiving the ID signal transmitted by each transmitter 2 and for data communication with each air-conditioning device 4 and each lighting device 5 (see FIG. 1) installed on the ceiling in the floor F. In the present embodiment, communication of each transmitter 2, each air-conditioning device 4, and each lighting device 5 with the user terminal 3 is performed, for example, based on known wireless communication standards, such as Wi-Fi (registered trademark), Wi-SUN (registered trademark), Bluetooth (registered trademark) Low Energy (BLE), and the like.

The CPU 33 performs overall control over the user terminal 3. Details of functions of the user terminal 3 achieved by the CPU 33 are described later. The ROM 34 stores pieces of firmware and data for use in execution of these pieces of firmware. The RAM 35 is used as a work area of the CPU 33.

The auxiliary storage device 36 is an example of installation position storage means, and is configured to include a readable and writable non-volatile semiconductor memory, such as an electrically erasable programmable read-only memory (EEPROM), a flash memory, and the like. The auxiliary storage device 36 stores various types of programs including an application program (hereinafter referred to as a facility device application) for control of a facility device and data for use in execution of these programs. The facility device application can be downloaded to the user terminal 3 from a server operated by a manufacturer, a sales company, or the like of the air-conditioning device 4 and the lighting device 5, another program distribution server, or the like.

The facility device application can be stored and distributed in a computer-readable recording medium, such as a compact disc read only memory (CD-ROM), a digital versatile disc (DVD), a magneto-optical disc, a universal serial bus (USB) memory, a memory card, a hard disk drive (HDD), a solid state drive (SSD), or the like.

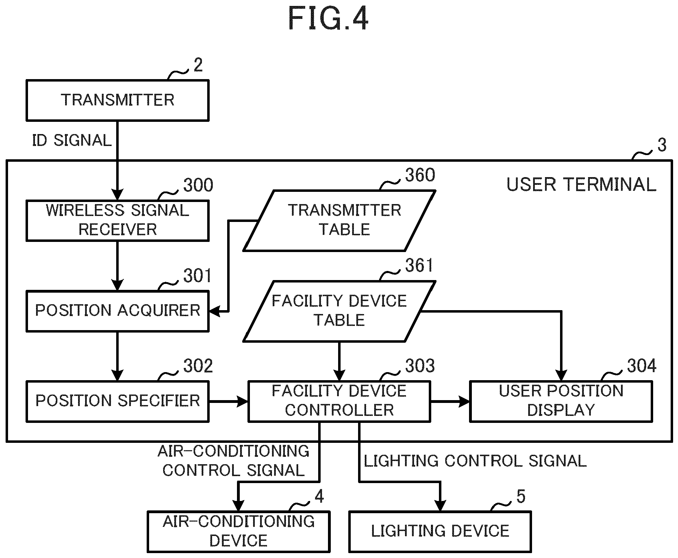

Next, functions of the user terminal 3 are described in detail. FIG. 4 is a block diagram illustrating a functional configuration of the user terminal 3. As illustrated in FIG. 4, the user terminal 3 includes a wireless signal receiver 300, a position acquirer 301, a position specifier 302, a facility device controller 303, and a user position display 304. These functional components are achieved by the CPU 33 executing the aforementioned facility device application.

The wireless signal receiver 300 is an example of electric field strength acquisition means. The wireless signal receiver 300 receives the aforementioned ID signal from each transmitter 2, and measures and acquires an electric field strength (also referred to as a radio field strength) at reception of the ID signal. In the present embodiment, the wireless signal receiver 300 measures and acquires a received signal strength indicator (RSSI) of the ID signal received from each transmitter 2. The wireless signal receiver 300 supplies to the position acquirer 301 an ID of the transmitter 2 extracted from the received ID signal and the acquired electric field strength.

The position acquirer 301 is an example of position acquisition means. The position acquirer 301 acquires, for combinations of three transmitters selected from all the transmitters 2 installed on the ceiling in the floor F, estimated positions of its own (that is, the user terminal 3) per the principle of triangulation (also referred to as a three-point measurement), each of the estimated positions being acquired based on electric field strengths acquired for the three transmitters 2 of each combination and installation positions of the three transmitters 2 of each combination. The estimated position acquired here is xy coordinates in a plane of the floor F. The position acquirer 301 refers to a transmitter table 360 and acquires the installation position of each transmitter 2.

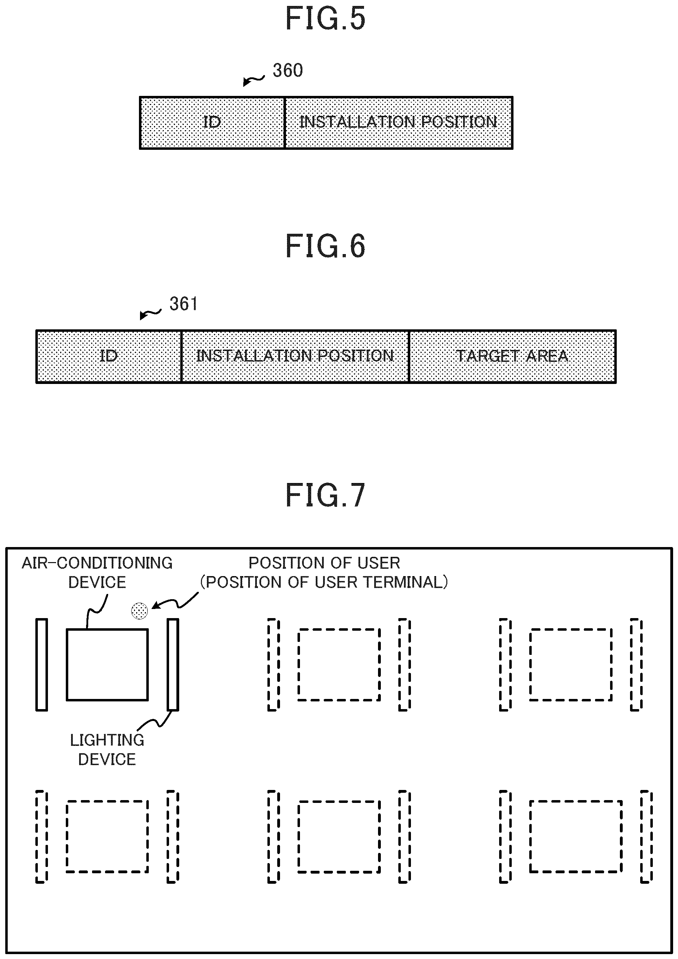

As illustrated in FIG. 5, the transmitter table 360 is a data table whose number of records, each including an "ID" item and an "installation position" item, corresponds to a total count of the transmitters 2 (six units in the present embodiment), and the transmitter table 360 is stored in the auxiliary storage device 36. The ID of the transmitter 2 is stored in the "ID" item, and the installation position (for example, three-dimensional coordinate values) of the transmitter 2 is stored in the "installation position" item.

Since six transmitters 2 are installed in the present embodiment, the total count of the aforementioned combinations is ₆C₃ = 20, and the total count of the estimated positions of the user terminal 3 acquired by the position acquirer 301 is 20. The position acquirer 301 supplies to the position specifier 302 the estimated positions of the user terminal 3 for the acquired combinations.

The position specifier 302 is an example of position specifying means. The position specifier 302 specifies a position of its own (that is, the user terminal 3) based on the estimated positions of the user terminal 3 acquired for the combinations. For example, the position specifier 302 specifies the position of the user terminal 3 by any one of the following methods (1) to (3).
(1) Take an average of the estimation positions acquired by the position acquirer 301.
(2) Take a weighted average by weighting each estimated position such that a combination having a higher electric field strength (in other words, a greater electric field strength) is more heavily weighted.
(3) Perform estimation by artificial intelligence (AI) previously trained by using (i) the estimated positions acquired per the principle of triangulation for combinations of the three transmitters selected from all the transmitters 2 installed on the ceiling in the floor F and (ii) a position that is correct data obtained by another means (user input, camera image, and the like).

In a case where any of the above methods (1) to (3) is used, the position specifier 302 may exclude, from among the estimated positions of the user terminal 3 acquired for the combinations, an estimated position that is at least a predetermined distance away from the most recently specified position of the user terminal 3 (that is, the last specified position of the user terminal 3). The initial position in this case may be a position of an entrance of the floor F or may be obtained by a non-illustrated room entrance and exit detector disposed separately.

The position specifier 302 supplies to the facility device controller 303 the position of the user terminal 3 specified as above. The facility device controller 303 is an example of control means. The facility device controller 303 controls the air-conditioning device 4 and the lighting device 5 based on the position of the user terminal 3 specified by the position specifier 302. Specifically, first, the facility device controller 303 specifies the air-conditioning device 4 corresponding to the an air-conditioning target area including the specified position of the user terminal 3 and the lighting device 5 corresponding to the lighting target area including the specified position of the user terminal 3.

In this case, the facility device controller 303 refers to a facility device table 361 and specifies the air-conditioning device 4 and the lighting device 5 corresponding to the above target areas. As illustrated in FIG. 6, the facility device table 361 is a data table whose number of records, each including the "ID" item, the "installation position" item, and the "target area" item, corresponds to a total count of the air-conditioning devices 4 and the lighting devices 5 (18 units in the present embodiment), and the facility device table 361 is stored in the auxiliary storage device 36. The ID of the facility device (that is, the air-conditioning device 4 or the lighting device 5) is stored in the "ID" item, the installation position (for example, xy coordinates in the ceiling in the floor F) of the facility device is stored in the "installation position" item, and information (represented by two or more sets of xy coordinates in the floor F) indicating the target area corresponding to the facility device is stored in a "target area" item.

The facility device controller 303 instructs the specified air-conditioning device 4 and the specified lighting device 5 to start an operation. Specifically, the facility device controller 303 transmits to the specified air-conditioning device 4 an air-conditioning control signal indicating an operation start instruction. The air-conditioning device 4 having received the air-conditioning control signal starts a cooling operation or a heating operation. The facility device controller 303 also transmits a lighting control signal indicating a lighting start instruction to the specified lighting device 5. The lighting device 5 having received the lighting control signal performs a lighting operation.

The facility device controller 303 supplies to the user position display 304 the specified position of the user terminal 3 and results of the control over the facility devices (the air-conditioning device 4 and the lighting device 5). The user position display 304 is an example of user position display means. The user position display 304 displays, on the display 30, the position of the user terminal 3 in the floor F, that is, a screen (referred to as a user position screen) indicating the position of the user. On the user position screen, as illustrated in FIG. 7, an icon indicating the user is displayed based on the position of the user terminal 3, and icons of the facility devices (that is, the air-conditioning devices 4 and the lighting devices 5) are displayed based on the installation positions of the respective facility devices. In addition, the icons corresponding to the facility devices controlled based on the position of the user are displayed in a mode distinguishable from the icons of the other facility devices.

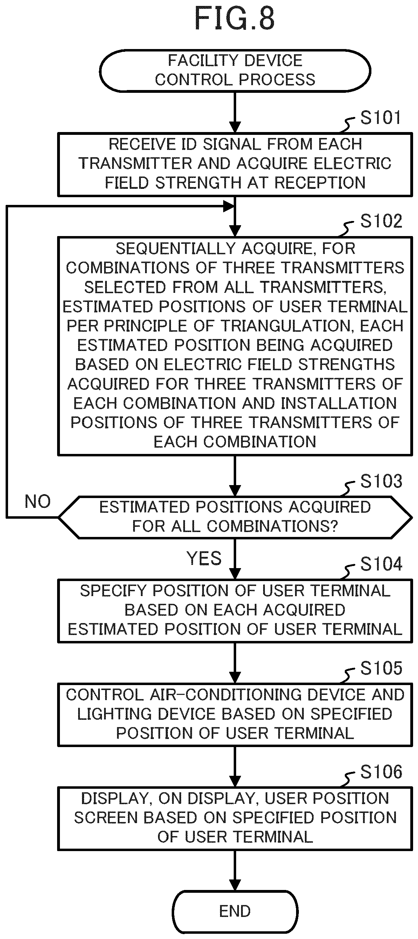

FIG. 8 is a flowchart illustrating steps of a facility device control process executed by the user terminal 3. The user terminal 3 repeatedly executes the facility device control process periodically upon start of the device control application by user operation.

The wireless signal receiver 300 receives the ID signal from each transmitter 2, and measures and acquires the electric field strength at reception of the ID signal (step S101).

The position acquirer 301 sequentially acquires, for the combinations of the three transmitters selected from all the transmitters 2 installed on the ceiling in the floor F, the estimated positions of the user terminal 3 per the principle of triangulation, each of the estimated positions being acquired based on the electric field strengths acquired by the wireless signal receiver 300 for the three transmitters 2 of each combination and the installation positions, acquired from the transmitter table 360, of the three transmitters of each combination (step S102).

Upon acquisition of the estimated position for all the combinations (Yes in step S103), the position specifier 302 specifies the position of the user terminal 3 based on the estimated positions of the user terminal 3 acquired for each combination (step S104).

The facility device controller 303 controls the air-conditioning device 4 and the lighting device 5 based on the position of the user terminal 3 specified by the position specifier 302 (step S105).

The user position display 304 displays, on the display 30, the user position screen (see FIG. 7) based on the position of the user terminal 3 specified by the position specifier 302 (step S106).

As described above, according to the facility device control system 1 of the present embodiment, the user terminal 3 receives the ID signals that are wireless signals that include the IDs of the transmitters 2 and are transmitted periodically from all the transmitters 2 (that is, six transmitters 2) installed on the ceiling in the floor F, and measures and acquires the electric field strengths at reception of the ID signals. The user terminal 3 acquires, for combinations of the three transmitters 2 selected from all the transmitters 2, the estimated positions of the user terminal 3 in the floor F per the principle of triangulation, each of the estimated positions being acquired based on the electric field strengths acquired for the three transmitters of each combination and the installation positions of the three transmitters of each combination. Then the user terminal 3 specifies, based on each of the above estimated positions, the position of the user terminal 3 in the floor F using any of the aforementioned methods.

Thus, the position of the user terminal 3, that is, the position of the user carrying the user terminal 3 can be specified with high accuracy. In addition, the user terminal 3 controls, based on the position of the user specified with high accuracy in this manner, the facility devices (the air-conditioning devices 4 and the lighting devices 5) disposed in the floor F. This enables proper control of the facility device in accordance with the position of the user and results in improved comfort of the user and improved energy savings.

The user terminal 3 displays, on the display 30, the user position screen indicating (i) the position of the user in the floor F and (ii) the facility device controlled based on the position of the user. Thus, the user can easily know where the user is located and which facility device is controlled as a result of where the user is located.

### Embodiment 2

Next, Embodiment 2 of the present disclosure is described. In the following description, components and the like common to those of Embodiment 1 are assigned the same reference numerals and the description thereof is omitted.

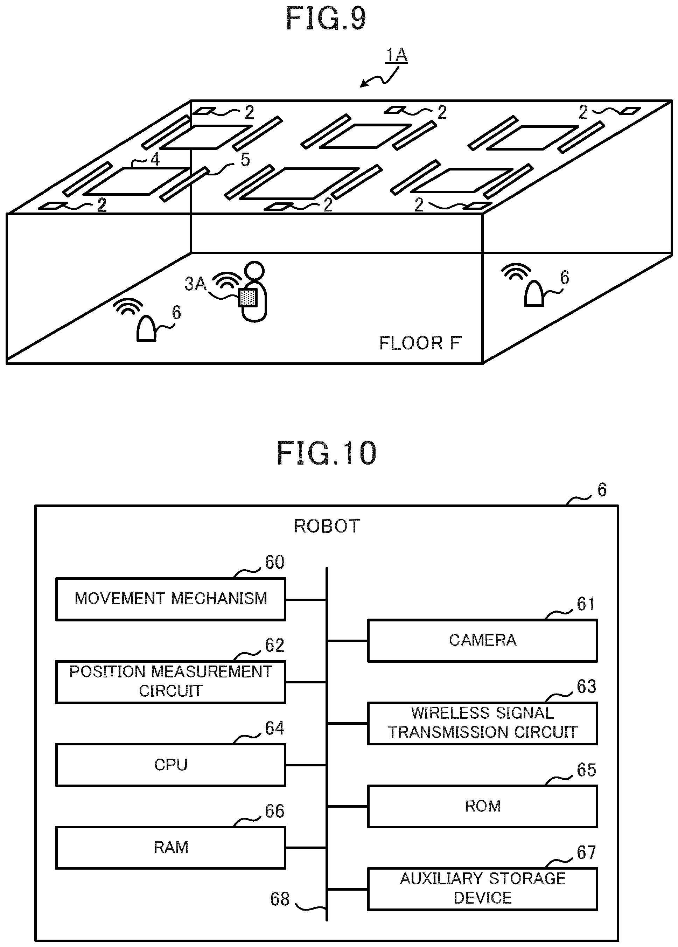

FIG. 9 is a diagram illustrating an overall configuration of a facility device control system 1A in Embodiment 2. The facility device control system 1A includes six transmitters 2 installed on the ceiling in the floor F, a user terminal 3A carried by a user, and one or more robots 6.

The robot 6 is a robot that travels autonomously on the floor F. For example, the robot 6 performs tasks for building management, such as vacuuming and cleaning dust from the floor, detecting and providing notification of a prowler or an emergency situation such as a fire, delivering documents, packages, and the like. As illustrated in FIG. 10, the robot 6 includes a movement mechanism 60, a camera 61, a position measurement circuit 62, a wireless signal transmission circuit 63, a CPU 64, a ROM 65, a RAM 66, and an auxiliary storage device 67. These components are connected to one another via a bus 68. In addition to these components, the robot 6 further includes hardware adapted for tasks of the building management (for example, cleaning and the like).

The movement mechanism 60 is a mechanism for travelling on the floor F. The movement mechanism 60 includes, for example, tires, a motor, and the like, and operates based on an instruction from the CPU 64. The camera 61 is a visible light camera, and includes an image sensor, for example, a charge-coupled device (CCD), a complementary metal oxide semiconductor (CMOS), and the like. The camera 61 captures an image in accordance with the instruction from the CPU 64 and outputs image data indicating the captured image.

The position measurement circuit 62 is a circuit that includes sensors, for example, a gyroscope, an acceleration sensor, a rotary encoder, and the like, and performs measurement in accordance with an instruction from the CPU 64 and outputs a result of the measurement.

The wireless signal transmission circuit 63 transmits the later-described position signal based on the wireless communication standard in the same manner as that of the transmitter 2.

The CPU 64 performs overall control over the robot 6. ROM 65 stores pieces of firmware and data for use in execution of these pieces of firmware. The RAM 66 is used as work area of the CPU 64. The auxiliary storage device 67 is configured to include a readable and writable non-volatile semiconductor memory, such as an EEPROM, a flash memory, and the like. The auxiliary storage device 67 stores (i) a program for periodically transmitting a position signal that is a wireless signal including an ID of the robot 6 and a current position, (ii) a program for autonomous travelling, (iii) a program for building management tasks, and (iv) data for use in execution of these programs.

At a predetermined time, the robot 6 starts travelling from a predetermined standby location in the floor F (for example, a location where a charging facility for the robot 6 is installed), and makes rounds of the floor F based on map data of the floor F and a round rule that are previously stored in the auxiliary storage device 67. During the travelling, upon detection of obstacles from the image captured by the camera 61, the robot 6 avoids the obstacles and continues to make the rounds. Then, upon completion of making the rounds of the floor F, the robot 6 returns to the standby location and waits until the next round start time comes.

The robot 6 periodically transmits the position signal that is wireless signal including its own ID and the current position. The current position is, for example, a three-dimensional coordinate value, and is derived based on the three-dimensional coordinate value of the standby location previously stored in the auxiliary storage device 67, the measurement result of the position measurement circuit 62, and the map data of the floor F.

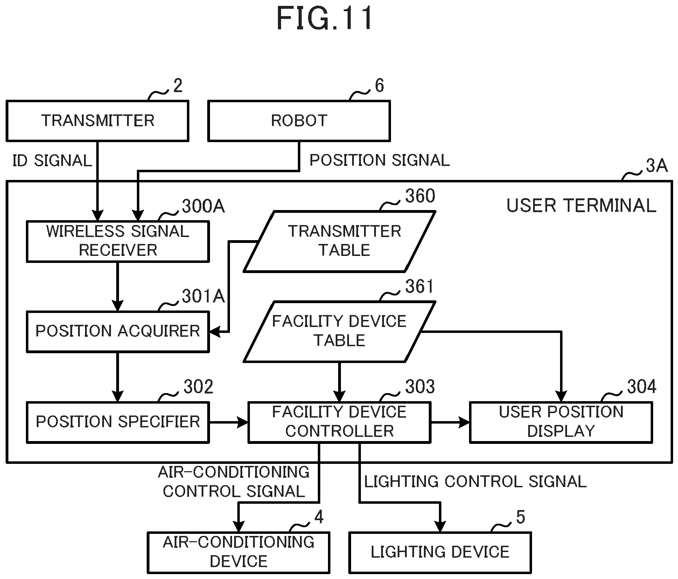

The hardware configuration of the user terminal 3A is similar to that of the user terminal 3 of Embodiment 1 (see FIG. 3). However, the functional configuration of the user terminal 3A differs from that of the user terminal 3 of Embodiment 1 (see FIG. 4). Such differences are described below in detail with reference to FIG. 11.

As illustrated in FIG. 11, the user terminal 3A includes a wireless signal receiver 300A, a position acquirer 301A, the position specifier 302, the facility device controller 303, and the user position display 304. These functional components are achieved by the CPU 33 of the user terminal 3A executing a facility device application that is an application program for controlling the facility device and that is stored in the auxiliary storage device 36.

The wireless signal receiver 300A is an example of electric field strength acquisition means. Similarly to the wireless signal receiver 300 of Embodiment 1, the wireless signal receiver 300A receives the ID signal transmitted by each transmitter 2 and measures and acquires an electric field strength at reception of the ID signal. The wireless signal receiver 300A supplies to the position acquirer 301A the ID of the transmitter 2 extracted from the received ID signal and the acquired electric field strength.

The wireless signal receiver 300A receives the position signal transmitted by the robot 6, and measures and acquires the electric field strength at reception of the position signal. In the present embodiment, the wireless signal receiver 300A measures and acquires an RSSI of the position signal received from the robot 6. The wireless signal receiver 300A supplies to the position acquirer 301A the ID and the current position of the robot 6 extracted from the received position signal and the acquired electric field strength.

The position acquirer 301A is an example of position acquisition means. The position acquirer 301A acquires, for combinations of three devices selected from devices that are all the transmitters 2 installed on the ceiling in the floor F and all the robots 6, estimated position of its own (that is, the user terminal 3A) per the principle of triangulation, each of the estimated positions being acquired based on the electric field strengths acquired for the three devices of each combination and the installation or current positions of the three devices of each combination. The estimated position acquired here is xy coordinates in a plane of the floor F in the same manner as Embodiment 1. The position acquirer 301A supplies to the position specifier 302 the estimated positions of the user terminal 3A for the acquired combinations.

Since the position specifier 302, the facility device controller 303, and the user position display 304 are similar to those of Embodiment 1, the descriptions thereof are omitted.

As described above, according to the facility device control system 1A of the present embodiment, the user terminal 3A receives the ID signals that are the wireless signals that include the ID of the transmitter 2 and are transmitted periodically from all the transmitters 2 (that is, six transmitters 2) installed on the ceiling in the floor F, and measures and acquires the electric field strengths at reception of the ID signals. The user terminal 3A receives the position signal that is a wireless signal that includes the ID of the robot 6 and the current position and is transmitted periodically from one or more robots 6 that make the rounds of the floor F, and measures and acquires the electric field strength at reception of the position signal.

Then the user terminal 3A acquires, for the combination of the three devices selected from the devices that are all the transmitters 2 and all the robots 6, the estimated positions of the user terminal 3A in the floor F per the principle of triangulation, each of the estimated positions being acquired based on the electric field strengths acquired for the three devices of each combination and the installation or current positions of the three devices of each combination. Then the user terminal 3A specifies, based on each of the above estimated positions, the position of the user terminal 3A in the floor F using any of the methods described in Embodiment 1.

Thus, the position of the user terminal 3A, that is, the position of the user carrying the user terminal 3A can be specified with high accuracy. In addition, the user terminal 3A controls, based on the position of the user specified with high accuracy, the facility devices (the air-conditioning devices 4 and the lighting devices 5) disposed in the floor F. This enables proper control of the facility device in accordance with the position of the user and results in improved comfort of the user and improved energy savings.

The user terminal 3A displays, on the display 30, the user position screen indicating (i) the position of the user in the floor F and (ii) the facility device controlled based on the position of the user. Thus, the user can easily know where the user is located and which facility device is controlled as a result of where the user is located.

The present disclosure is not limited to each of the above embodiments, and various modifications can, of course, be made without departing from the gist of the present disclosure.

For example, in each of the user terminals 3 and 3A, the position specifier 302 may specify, as the position of each of the user terminals 3 and 3A, any one of the air-conditioning target areas in the floor F and any one of the lighting target areas in the floor F. Specifically, the position specifier 302 specifies, as the position of each of the user terminals 3 and 3A, the air-conditioning target area having the largest number of estimated positions of each of the user terminals 3 and 3A acquired by the respective position acquirers 301 and 301A among a plurality of air-conditioning areas subdivided in the floor F. Similarly, the position specifier 302 specifies, as the position of each of the user terminals 3 and 3A, the lighting target area having the largest number of estimated positions of each of the user terminals 3 and 3A acquired by the respective position acquirers 301 and 301A among the lighting target areas subdivided in the floor F.

In each of the user terminals 3 and 3A, in a case where a user is present in one air-conditioning target area, the facility device controller 303 may cause not only the air-conditioning device 4 corresponding to the air-conditioning target area to operate but also may adjust an airflow, that is, an air blowing direction and an air velocity by the air-conditioning device 4 based on the position of the user to make the user feel comfortable.

Of course, even in a case where users carrying the user terminals 3 and 3A are present in the floor F, the facility device control systems 1 and 1A can achieve proper facility device control in accordance with the position of each user.

In a case where an air-conditioning controller that performs centralized management over all the air-conditioning devices 4 is installed, the user terminals 3 and 3A may control the air-conditioning devices 4 via the air-conditioning controller, instead of controlling the air-conditioning devices 4 directly. In this case, the air-conditioning controller may adjust an air-conditioning intensity in the air-conditioning target area based on the number of users who are present in the one air-conditioning target area. For example, in a case where the number of users is equal to or more than a certain number, the air-conditioning controller increases the air-conditioning intensity of the air-conditioning target area. Examples of control for increasing the air-conditioning intensity include control for increasing the air velocity of the air-conditioning device 4 and control for decreasing during cooling and increasing during heating the setting temperature of the air-conditioning device 4.

In a case where no user is present for at least a certain period of time in the air-conditioning target area of the operating air-conditioning device 4, the above air-conditioning controller may stop the operation of the air-conditioning device 4.

In a case where the lighting controller that performs centralized management over all the lighting devices 5 is installed, the user terminals 3 and 3A may control the lighting devices 5 via the lighting controller instead of controlling the lighting devices 5 directly. In this case, the lighting controller may turn off the lighting device 5 that is on, in a case where no user is present for at least a certain period of time in the lighting target area of the lighting device 5.

All or a part of the functional components of the user terminals 3 and 3A (see FIGS. 4 and 11) may be achieved by dedicated hardware. Examples of the dedicated hardware include a single circuit, a composite circuit, a programmed processor, an application specific integrated circuit (ASIC), a field-programmable gate array (FPGA), or a combination thereof.

The technical concept according to each modified example above may be achieved individually or achieved by combination thereof as appropriate.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

### Industrial Applicability

The present disclosure can be preferably used in a system for controlling a facility device disposed in a building or the like.

### Reference Signs List

- 1, 1A: Facility device control system

- 2: Transmitter
- 3, 3A: User terminal
- 4: Air-conditioning device
- 5: Lighting device
- 6: Robot
- 20, 63: Wireless signal transmission circuit
- 30: Display
- 31: Operation receiver
- 32: Communication interface
- 33, 64: CPU
- 34, 65: ROM
- 35, 66: RAM
- 36, 67: Auxiliary storage device
- 37,68: Bus
- 60: Movement mechanism
- 61: Camera
- 62: Position measurement circuit
- 300, 300A: Wireless signal receiver
- 301, 301A: Position acquirer
- 302: Position specifier
- 303: Facility device controller
- 304: User position display
- 360: Transmitter table
- 361: Facility device table

## Claims

1. A facility device control system, comprising:
four or more transmitters and a user terminal, wherein
each transmitter of the four or more transmitters transmits a wireless signal including identification information for identification of the transmitter,
the user terminal comprises
electric field strength acquisition means for acquiring an electric field strength at reception of the wireless signal,
installation position storage means for storing the identification information and an installation position in association with each other, for each transmitter,
position acquisition means for acquiring, for combinations of three transmitters selected from the four or more transmitters, estimated positions of the user terminal, each of the estimated positions being acquired based on (i) electric field strengths acquired by the electric field strength acquisition means for the three transmitters of each combination and (ii) installation positions of the three transmitters of each combination,
position specifying means for specifying a position of the user terminal based on the estimated positions acquired for each combination, and
control means for controlling a facility device based on the specified position.

2. The facility device control system according to claim 1, wherein the user terminal further comprises user position displaying means for displaying, on a display, a screen indicating the specified position.

3. The facility device control system according to claim 1 or 2, wherein the control means specifies, from among a plurality of facility devices, one or more facility devices corresponding to a target area including the specified position, and instructs the specified one or more facility devices to start an operation.

4. The facility device control system according to any one of claims 1 to 3, further comprising:
a robot that travels autonomously, wherein
the robot transmits a wireless signal including identification information for identification of the robot and a current position of the robot,
the electric field strength acquisition means further acquires an electric field strength at reception of the wireless signal from the robot, and
the position acquisition means acquires, for combinations of three devices selected from devices that are the four or more transmitters and the robot, estimated positions of the user terminal, each of the estimated positions being acquired based on (i) electric field strengths acquired by the electric field strength acquisition means for the three devices of each combination and (ii) the installation or current positions of the three devices of each combination.

5. The facility device control system according to any one of claims 1 to 4, wherein the position specifying means specifies, as the position of the user terminal, an average of the estimated positions acquired for each combination.

6. The facility device control system according to any one of claims 1 to 4, wherein the position specifying means specifies, as the position of the user terminal, a weighted average obtained by weighting the estimated positions acquired for each combination in accordance with magnitudes of the electric field strengths for each combination.

7. The facility device control system according to any one of claims 1 to 6, wherein when specifying the position of the user terminal, the position specifying means excludes, from among the estimated positions acquired for each combination, an estimated position that is at least a predetermined distance away from the position of the user terminal that is specified last.

8. A user terminal, comprising:
electric field strength acquisition means for acquiring an electric field strength at reception of a wireless signal that is transmitted by each transmitter of four or more transmitters and includes identification information for identification of the transmitter;
installation position storage means for storing the identification information and an installation position in association with each other, for each transmitter of the four or more transmitters;
position acquisition means for acquiring, for combinations of three transmitters selected from the four or more transmitters, estimated positions of the user terminal, each of the estimated positions being acquired based on (i) electric field strengths acquired by the electric field strength acquisition means for the three transmitters of each combination and (ii) installation positions of the three transmitters of each combination;
position specifying means for specifying a position of the user terminal based on the estimated positions acquired for each combination; and
control means for controlling a facility device based on the specified position.

9. A facility device control method, comprising:
acquiring an electric field strength at reception of a wireless signal that is transmitted by each transmitter of four or more transmitters and includes identification information for identification of the transmitter;
acquiring, for combinations of three transmitters selected from the four or more transmitters, estimated positions of a user terminal, each of the estimated positions being acquired based on (i) electric field strengths acquired in the acquiring of the electric field strength for the three transmitters of each combination and (ii) installation positions previously stored of the three transmitters of each combination;
specifying a position of the user terminal based on the estimated positions acquired for each combination; and
controlling a facility device based on the specified position.

10. A program causing a computer to function as:
electric field strength acquisition means for acquiring an electric field strength at reception of a wireless signal that is transmitted by each transmitter of four or more transmitters and includes identification information for identification of the transmitter;
position acquisition means for acquiring, for combinations of three transmitters selected from the four or more transmitters, estimated positions of the computer, each of the estimated positions being acquired based on (i) electric field strengths acquired by the electric field strength acquisition means for the three transmitters of each combination and (ii) installation positions previously stored of the three transmitters of each combination;
position specifying means for specifying a position of the computer based on the estimated positions acquired for each combination; and
control means for controlling a facility device based on the specified position.
